# EUROPÄISCHE PATENTSCHRIFT

(11) **EP 0 484 794 B1**
(45) Veröffentlichungstag und Bekanntmachung des Hinweises auf die Patenterteilung: **15.01.1997**
(21) Anmeldenummer: 91118390.3
(22) Anmeldetag: 29.10.1991
(51) Int. Cl.: A01D 78/10, A01B 73/04

(54) **Heuwerbungsmaschine**
Hay-making machine
Machine de fenaison

(30) Priorität: 08.11.1990 DE 9015320 U
(43) Veröffentlichungstag der Anmeldung: 13.05.1992
(73) Patentinhaber: H. Niemeyer Söhne GmbH & Co. KG, D-48466 Hörstel (DE)
(72) Erfinder: Barlage, Bruno, W-4446 Hörstel (DE); Ungruh, Josef, W-4440 Rheine (DE); Hohm, Norbert, W-4446 Hörstel (DE)

(56) Entgegenhaltungen:
- EP-A- 0 381 970
- DE-U- 8 807 054
- FR-A- 2 590 107

## Beschreibung

Die Erfindung betrifft eine Heuwerbungsmaschine gemäß dem Oberbegriff des Anspruchs 1.

Heuwerbungsmaschinen mit großen Kreiselrechendurchmessern erreichen wegen ihrer großen Arbeitsbreite eine beachtliche Flächenleistung. Sie sind vorwiegend mit zwei Kreiselrechen ausgerüstet, die in Arbeitsstellung über die Breite des Traktors hinausragen, so daß sie zum Transport über fahrtrichtungsparallele Achsen um etwa 90° in eine Transportstellung geschwenkt werden, wodurch die Transportbreite des Schwaders verringert wird.

Aus dem DE-U-88 07 054.9 ist ein derartiges Gerät bekannt. Bei ihm werden die beiden Kreiselrechen zum Transport um etwa 90° in eine senkrechte Lage geschwenkt. In Arbeitsstellung muß das Maschinengestell eine ausreichende Bodenfreiheit für den Schwad lassen. Durch die dadurch bedingte hohe Anlenkung der Ausleger der Kreiselrechen kann es vorkommen, daß die Oberkanten der im Transport senkrecht stehenden Kreiselrechen in der Höhe über die zulässige Gesamthöhe für den Straßentransport hinausragen. Um dies zu vermeiden, ist der Kreiselrechendurchmesser und damit die Arbeitsbreite der Heuwerbungsmaschine begrenzt.

Die EP 0 381 970 A2 zeigt eine Kreiselheumaschine mit zwei Kreiseln, die zum Transport geschwenkt und gleichzeitig, durch Koppelstangen geführt, leicht abgesenkt werden. Diese Maschine weist die Merkmale des Oberbegriffs des Anspruchs 1 auf.

Es sind ferner Heuwerbungsmaschinen mit hochklappbaren Kreiselrechen bekannt, bei denen zur Verringerung der Transporthöhe einzelne Zinkenträger demontiert werden. Dies ist umständlich und zeitaufwendig.

Aufgabe der Erfindung ist es, bei einer Heuwerbungsmaschine mit großem Kreiselrechendurchmesser geringe Transportabmessungen zu schaffen.

Die Aufgabe der Erfindung wird durch die im Anspruch 1 genannten Merkmale gelöst.

Hinsichtlich weiterer, wesentlicher, vorteilhafter Ausgestaltungen der Erfindung wird auf die Ansprüche 2 bis 11 verwiesen.

Nach der Erfindung kann jeder Kreiselrechen aus seiner für den Transport hochgeschwenkten Stellung durch Absenken zumindest eines Teils des Maschinengestells in seine endgültige Transportstellung abgesenkt werden. Dadurch wird die Transporthöhe des Schwaders wesentlich verringert, ohne seine Transportbreite zu erhöhen.

In einer weiteren vorteilhaften Ausgestaltung kann der Mittelbereich des Maschinengestells zur Absenkung knickbar ausgeführt sein, wobei das Maschinengestell mit seinem Mittelbereich verbundene Längslenker aufweist, die als Parallelogrammlenker ausgebildet sind, die jeweils eine gemeinsame mittlere Gelenkverbindung aufweisen.

In einer weiteren, vorteilhaften Ausführungsform kann der Ausleger jeden Kreiselrechens an einem relativ zum Maschinengestell abklappbaren Lenker gelenkig ausgebildet sein.

Alle Ausführungsformen lassen sich vorteilhafterweise über Stellzylinder betätigen, so daß eine einfache Bedienung vom Traktor aus gewährleistet ist.

Nach der Erfindung ist in einer weiteren, vorteilhaften Ausführungsform ein Hydraulikzylinder der Bestandteil eines Längslenkers. Hierdurch wird trotz aufgelockerter Bauweise eine einfache und preisgünstige Verstellmöglichkeit des Maschinengestells erreicht.

In einer weiteren, vorteilhaften Ausführungsform nach der Erfindung können das oder die Laufräder des Maschinengestells relativ zu diesem auf- und abverstellbar mit dem Maschinengestell verbunden sein. Dabei ist es besonders vorteilhaft, wenn Stützlenkerparallelogramme verwendet werden, damit die vertikale Schwenkachse der Laufräder sich bei der Verstellung in ihrer Winkellage nicht verändert. Es ist nach der Erfindung in vorteilhafter Weise möglich, jedem Laufrad ein Stützparallelogramm zuzuordnen oder beispielsweise für beide Laufräder ein gemeinsames Stützparallelogramm vorzusehen. Die bedienungsfreundliche Höhenverstellung erfolgt über ein oder mehrere Hydraulikzylinder, die dem jeweiligen Stützparallelogramm zugeordnet oder außerhalb von diesen angeordnet sind.

Zum Anheben des Schwadtuches ist in vorteilhafter Weise eine Vorrichtung vorgesehen, die das Schwadtuch während des Absenkvorganges der Kreiselrechen anhebt.

Je nach Ausführungsform kann es nach der Erfindung von Vorteil sein, wenn während des Absenkvorganges das Schwadtuch um etwa 90° in eine Transportstellung geklappt wird, wobei das Schwadtuch selbst durch geeignete Maßnahmen stabilisiert wird, damit es nicht durchhängt und die Transporthöhe verringert.

Weitere Merkmale und Vorteile der Erfindung ergeben sich aus der nachfolgenden Beschreibung und den Zeichnungen, in denen einige Ausführungsbeispiele der Heuwerbungsmaschine nach der Erfindung schematisch, angenähert maßstäblich dargestellt sind. Es zeigt:
- Fig. 1 -: Einen Schwader mit Parallelogrammlenkern gemäß Schnitt A-A nach Fig. 2, in Arbeitsstellung.
- Fig. 2 -: Eine Draufsicht des Schwaders nach Fig. 1.
- Fig. 3 -: Die endgültige Transportstellung des Schwaders gemäß Fig. 1.
- Fig. 4 -: Die Seitenansicht eines Schwaders, bei dem der Ausleger jeden Kreiselrechens an einem relativ zum Maschinengestell abklappbaren Lenker gelenkig angreift, gemäß Schnitt B-B nach Fig. 5, in Arbeitsstellung.
- Fig. 5 -: Die Draufsicht des Schwaders gemäß Fig. 4.
- Fig. 6 -: Die endgültige Transportstellung des Schwaders gemäß Fig. 4.
- Fig. 7 -: Die Seitenansicht eines Schwaders mit einem Hydraulikzylinder als Längslenker gemäß Schnitt C-C nach Fig. 8, in Arbeitsstellung.
- Fig. 8 -: Die Draufsicht des Schwaders gemäß Fig. 7.
- Fig. 9 -: Die endgültige Transportstellung des Schwaders gemäß Fig. 7.
- Fig. 10 -: Die Ansicht eines Schwaders in Fahrtrichtung und Transportstellung gemäß Fig. 9 .
- Fig. 11 -: Die Seitenansicht eines Schwaders im Schnitt mit relativ zum Maschinengestell auf- und abverstellbaren Laufrädern, in Arbeitsstellung.
- Fig. 12 -: Die endgültige Transportstellung des Schwaders gemäß Fig. 11.

Die in den Ausführungsbeispielen dargestellten Schwader haben vorzugsweise zwei, jeweils um eine senkrechte Drehachse (9) umlaufende Kreiselrechen (5,6), die von der Zapfwelle eines Traktors über Gelenkwellen und Verteilergetriebe angetrieben werden. Auf die Darstellung des Traktors und des Antriebs wurde verzichtet. Der Schwader ist über die ebenfalls nicht dargestellten Unterlenker des Traktordreipunktgestänges mit diesem verbunden, wobei die am Ende des Gerätes angeordneten Laufräder (21) vorzugsweise über ein seitlich der Mittelzugsachse des Gerätes angeordnetes Lenkgestänge (25,33,47,58) gesteuert werden, das mit einem Anschlußbock (1) verbunden ist, so daß die Steuerung der Laufräder (21) automatisch erfolgt und der Schwader zum Traktor ein optimales Nachlaufverhalten hat.

Der Schwader ist über den Anschlußbock (1) mit den Unterlenkern des Traktors verbunden. Die Beweglichkeit des Schwaders um die horizontale Achse, quer zur Fahrtrichtung (F) erfolgt über die Gelenkpunkte der Traktorunterlenker. Der Anschlußbock (1) ist über eine Hochachse begrenzt seitenbeweglich mit einem Maschinengestell (2,28,38,50) des Schwaders verbunden. Die Kreiselrechen (5,6) sind an Auslegern (3,4) beweglich befestigt, so daß sie sich in Arbeitsstellung über ein oder mehrere Stützräder (10), die sich unterhalb der Kreiselrechen (5,6) befinden, den Bodenunebenheiten optimal anpassen können. Dadurch werden die gesteuert an Zinkenarmen (7) befestigten Zinken (8) in der Höhe geführt. Die Kreiselrechen (5,6) drehen vorzugsweise gegenläufig, so daß ein Mittelschwad gebildet wird. Es ist jedoch auch möglich, die Kreiselrechen (5,6) gleichläufig anzutreiben, um einen Seitenschwad zu bilden.

Für die Transportstellung wird jeder Kreiselrechen (5,6) um jeweils eine fahrtrichtungsparallele Achse (19) um etwa 90° hochgeschwenkt, um die Transportbreite des Schwaders möglichst gering zu halten.

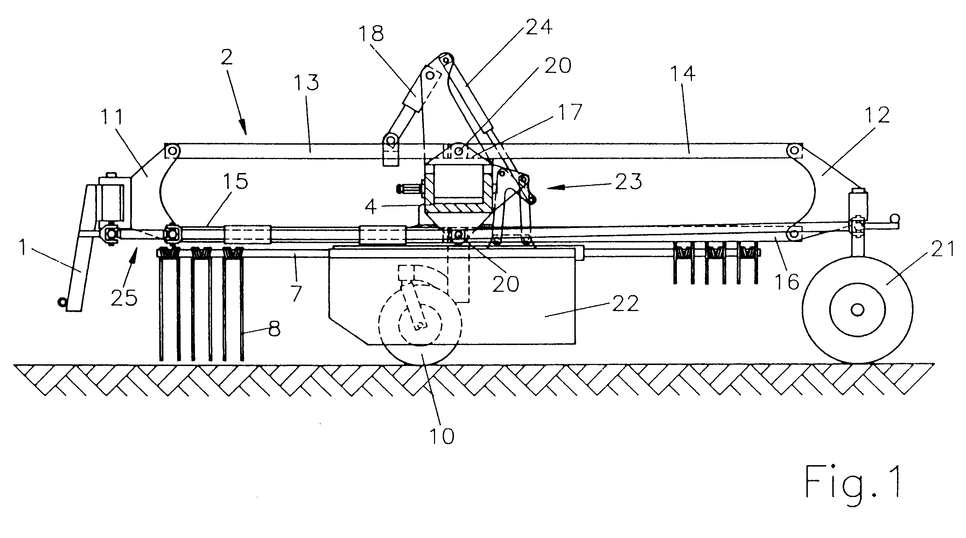

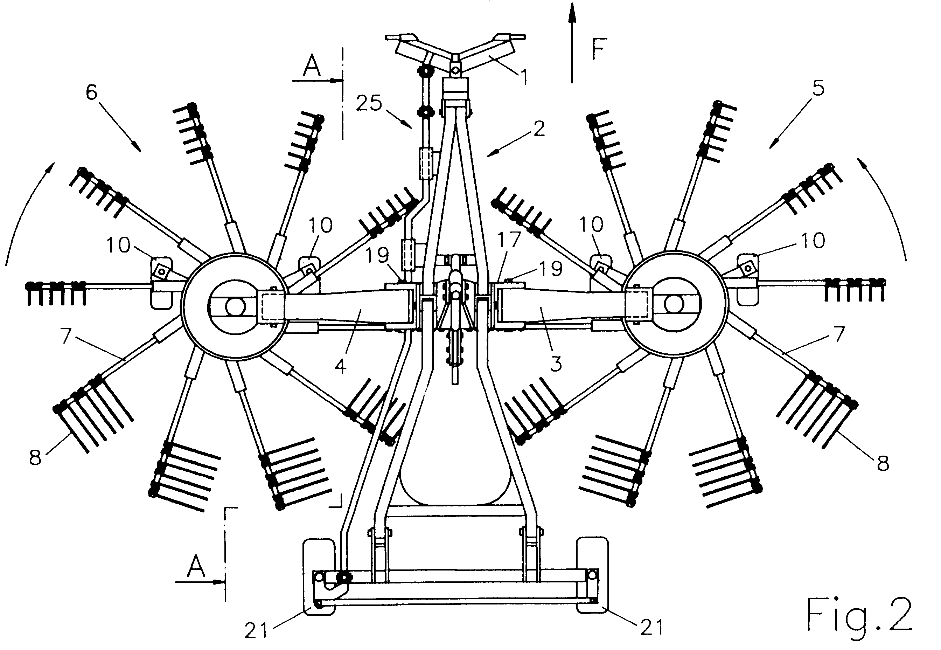

In Fig. 1 ist ein Ausführungsbeispiel nach der Erfindung gemäß Schnitt A-A, Fig. 2, in Arbeitsstellung schematisch dargestellt. Das Maschinengestell (2) besteht im wesentlichen aus Längslenkern (13,14,15,16), die in Höhe der Ausleger (3,4) mit einem Mittelträger (17) über Gelenkverbindungen (20) verbunden sind. Ein hydraulischer Stellzylinder (18) stabilisiert und bewegt das System, indem er am Längslenker (13) und dem Mittelträger (17) befestigt ist. Die Längslenker (13,15) sind mit ihrem vorderen Ende gelenkig mit einem vorderen Rahmenteil (11) und dieses mit dem Anschlußbock (1) schwenkbeweglich verbunden, während die Längslenker (14,16) mit ihrem hinteren Ende an dem hinteren Rahmenteil (12) angelenkt sind.

Ein mittig zwischen den Kreiselrechen (5,6) angeordnetes Schwadtuch (22) ist über ein Hubgestänge (23) an dem Mittelträger (17) angebracht. Es wird beispielsweise nach der Erfindung über einen hydraulischen Stellzylinder (24) betätigt.

Fig. 2 zeigt den Schwader in der Draufsicht in Arbeitsstellung.

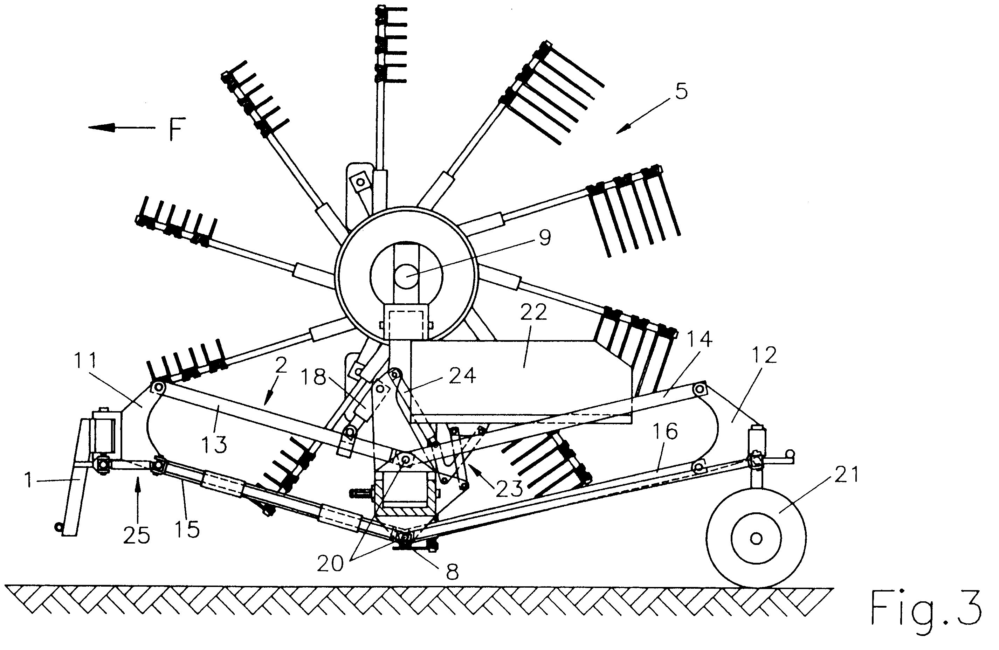

Um den Schwader in die endgültige Transportstellung (Fig. 3) zu bringen, werden zunächst die Kreiselrechen (5,6) in die senkrechte Transportstellung gebracht. Sodann wird die Gesamttransporthöhe verringert, indem das Maschinengestell (2) durch Betätigen des hydraulischen Stellzylinders (18) im Bereich des Mittelträgers (17) soweit abgeknickt wird, daß die Zinken (8) zur Bodenoberfläche noch eine für den Transport ausreichende Freiheit haben. Dabei bewegen sich die Längslenkerpaare (13,15;14,16) parallelogrammartig. Die Winkelstellung des Anbaubockes (1) und der vertikalen Schwenkachsen (26) der Laufräder (21) bleibt erhalten.

Das Schwadtuch (22) wird während des Absenkvorganges vorzugsweise durch Koppelung des hydraulischen Stellzylinders (18) und des Stellzylinders (24) über ein Hubgestänge (23) um etwa 180° in eine Transportstellung geschwenkt, damit es die Bodenfreiheit nicht beeinträchtigt. Dabei wird durch nicht dargestellte, stabilisierende Maßnahmen im Bereich des Schwadtuches (22) erreicht, daß dieses nicht durchhängt.

Das Lenkgestänge (25) ist nach der Erfindung so ausgebildet, daß es auch bei abgeknicktem Maschinengestell (2) voll funktionsfähig bleibt, indem es an den Knickpunkten mit entsprechenden Gelenken versehen ist.

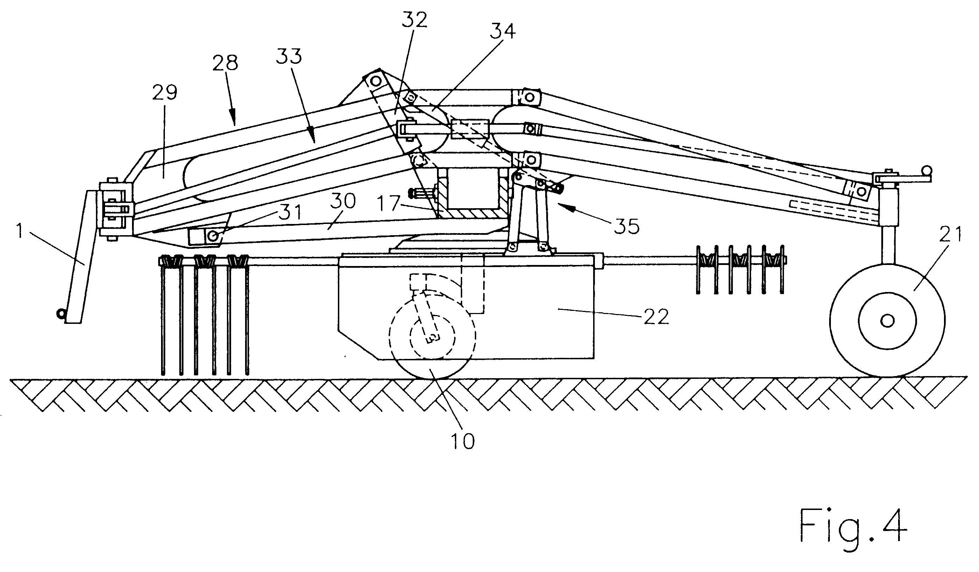

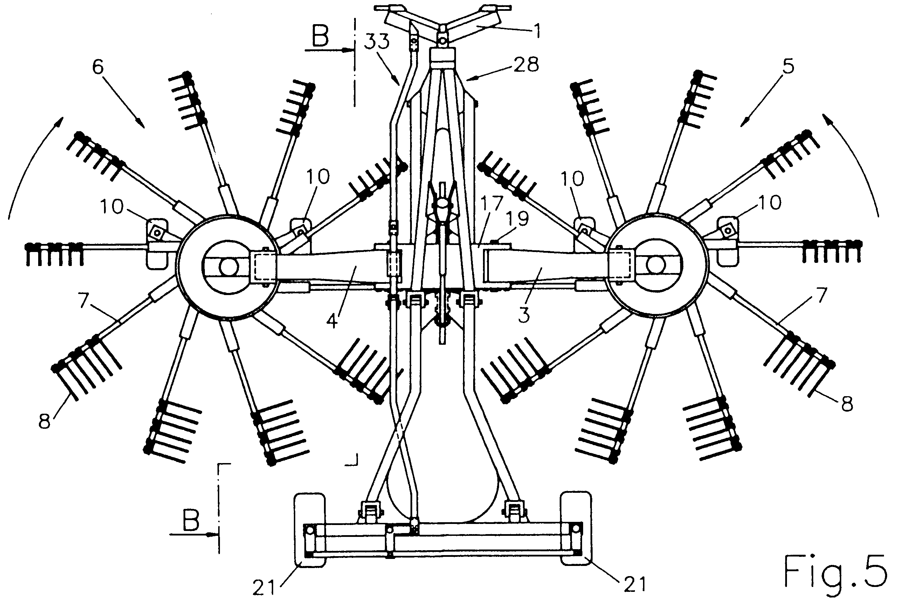

Ein weiteres Ausführungsbeispiel der Erfindung ist in den Fig. 4,5 und 6 schematisch dargestellt, wobei Fig. 4 eine Ansicht gemäß Schnitt B-B, Fig. 5, zeigt. Ein Maschinengestell (28) ist in Rahmenbauweise ausgeführt und hat eine große Bodenfreiheit für den sich unter ihm bildenden Schwad. Es ist über ein vorderes Rahmenteil (29) um eine Hochachse schwenkbeweglich mit dem Anschlußbock (1) verbunden. Der Mittelträger (17) mit den daran gelenkig angeordneten Auslegern (3,4) und Kreiselrechen (5,6) ist am rückwärtigen Ende eines vorzugsweise als Paar ausgebildeten Lenker (30) befestigt. Der Lenker (30) schwenkt um einen Gelenkpunkt (31), der sich am vorderen Rahmenteil (29) befindet. Bewegt und gehalten wird der Lenker (30) und damit die hochgeschwenkten Kreiselrechen (5,6) durch einen hydraulischen Stellzylinder (32), der diesen mit dem Maschinengestell (28) verbindet (Fig. 4).

In Fig. 5 ist die Draufsicht des Schwaders nach diesem Ausführungsbeispiel in Arbeitsstellung dargestellt.

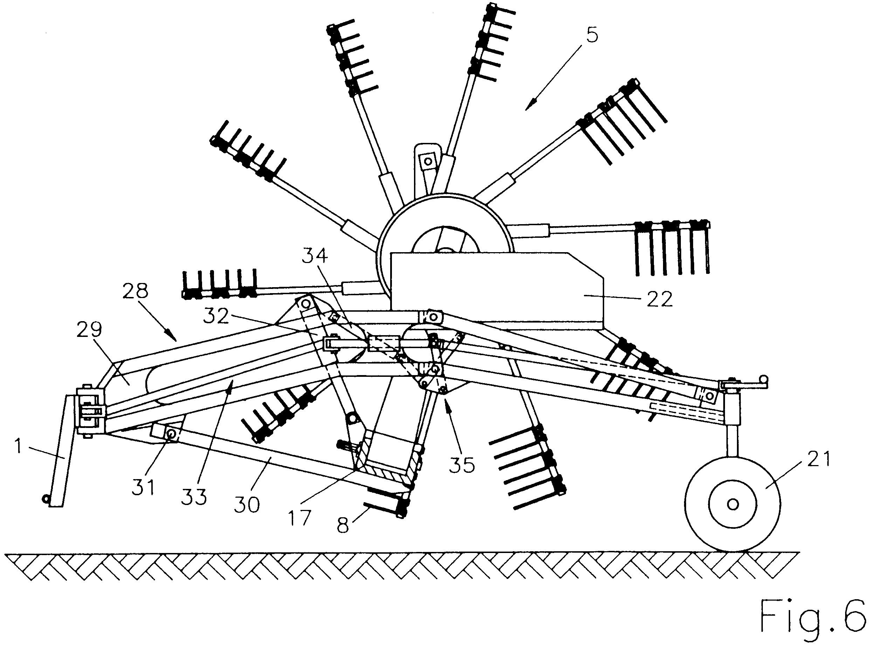

Um die endgültige Transportstellung (Fig. 6) des Schwaders zu erreichen, wird nach dem Anheben der Kreiselrechen (5,6) in eine etwa senkrechte Stellung der hydraulische Stellzylinder (32) vom Traktor aus betätigt, so daß sich der Mittelträger (17) mit den Kreiselrechen (5,6) um den Gelenkpunkt (31) so weit gegenüber dem Maschinengestell (28) absenkt, daß der Zinken (8) eine für den Transport ausreichende Bodenfreiheit behält. Damit ist die Gesamthöhe des Schwaders für den Transport wesentlich verringert.

Gleichzeitig mit dem Absenken der Kreiselrechen (5,6) wird der hydraulische Stellzylinder (34) so betätigt, daß über das Hubgestänge (35) das Schwadtuch (22) um etwa 180° geschwenkt in eine Transportstellung gebracht wird. Das Schwadtuch (22) ist durch Stabilisierungsmaßnahmen so ausgebildet, daß es in dieser Transportstellung nicht durchhängt und eventuell die Transporthöhe beeinträchtigt.

Ein Lenkgestänge (33) stellt die Verbindung zwischen den Laufrädern (21) und dem Anschlußbock (1) her, so daß die Laufräder (21) automatisch gesteuert sind und für einen optimalen Nachlauf des Schwaders während der Arbeit und im Transport sorgen.

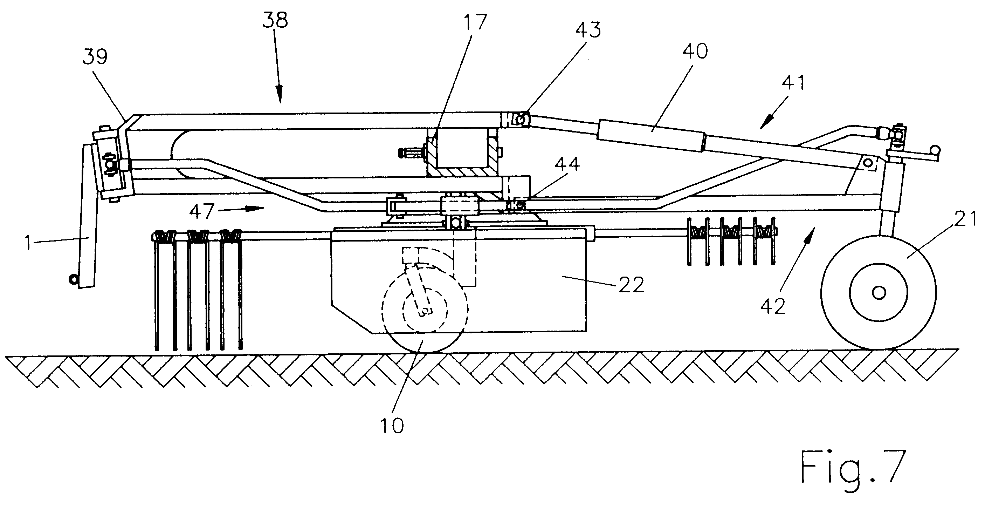

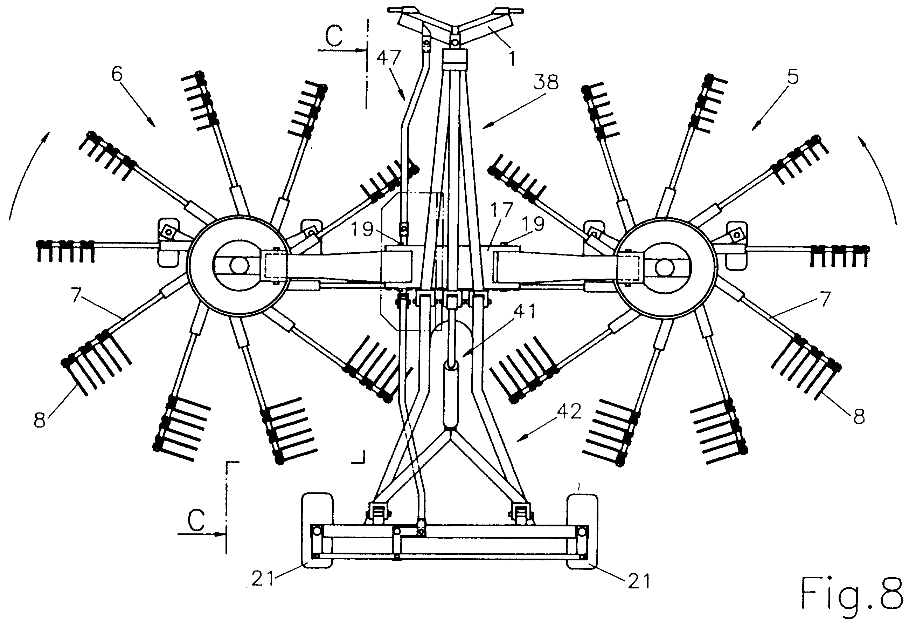

In den Fig. 7,8,9 und 10 ist ein weiteres Ausführungsbeispiel nach der Erfindung schematisch dargestellt. Fig. 7 zeigt eine Ansicht gemäß Schnitt C-C, Fig. 8 in Arbeitsstellung. Ein Maschinengestell (38) ist über ein vorderes Rahmenteil (39) mit dem Anschlußbock (1) schwenkbeweglich verbunden. Der hintere Teil des Maschinengestells (38) besteht aus den unteren Längslenkern (42) und dem oberen Längslenker (41), in den ein Hydraulikzylinder (40) integriert ist. Im Bereich des Mittelträgers (17) ist der Längslenker (41) im oberen Gelenkpunkt (43) und die unteren Längslenker (42) im unteren Gelenkpunkt (44) befestigt.

In Fig. 8 ist der Schwader nach diesem Ausführungsbeispiel in der Draufsicht in Arbeitsstellung dargestellt.

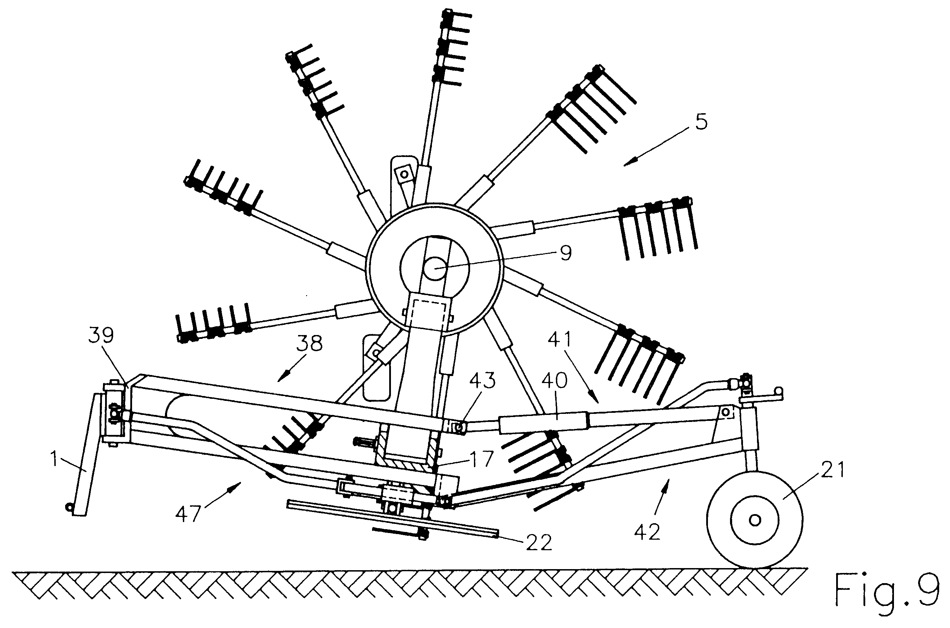

Fig. 9 zeigt die endgültige Transportstellung des Schwaders. Um diese zu erreichen, wird der Hydraulikzylinder (40) betätigt, wodurch das Maschinengestell im Bereich der Gelenkpunkte (43,44) abknickt und die sich in senkrechter Position befindlichen Kreiselrechen (5,6) so weit abgesenkt werden können, daß eine ausreichende Bodenfreiheit für den Transport verbleibt.

Das Schwadtuch (22) wird beispielsweise über ein Hubgestänge (45) und ein Stellzylinder (46) um ca. 90° geschwenkt, so daß es die notwendige Bodenfreiheit für den Transport erhält. Dabei wird das Schwadtuch (22) durch geeignete Maßnahmen stabilisiert, damit es in der geschwenkten Stellung nicht durchhängt.

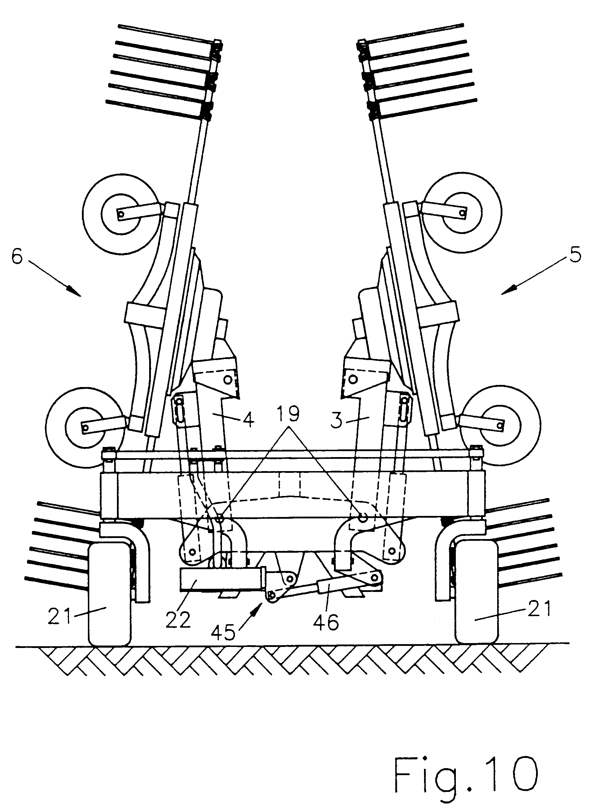

Fig. 10 zeigt dieses Ausführungsbeispiel in einer Ansicht in Fahrtrichtung (F) in der endgültigen Transportstellung, wobei die hochgeklappten Kreiselrechen (5,6) in ihrer vorteilhaften Endstellung im Transport deutlich zu sehen sind.

Über ein seitlich der Mittellängsachse des Schwaders angeordnetes Lenkergestänge (47), das mit dem Anschlußbock (1) gelenkig verbunden ist, werden die Laufräder (21) automatisch gesteuert, so daß der Schwader bei der Arbeit und in Transportstellung dem Traktor optimal nachläuft.

Bei den bis hierher beschriebenen Ausführungsbeispielen des Schwaders ist es für die endgültige Transportstellung nicht erforderlich, die Unterlenker des Traktordreipunktgestänges zu bewegen. Die Maschinengestelle (2,28,38) werden nach dem Hochklappen der Kreiselrechen (5,6) in ihre endgültige Transportstellung gebracht, indem die hydraulischen Stellzylinder (18,32,40) vom Traktor aus betätigt werden und das Schwadtuch (22) jeweils angehoben wird.

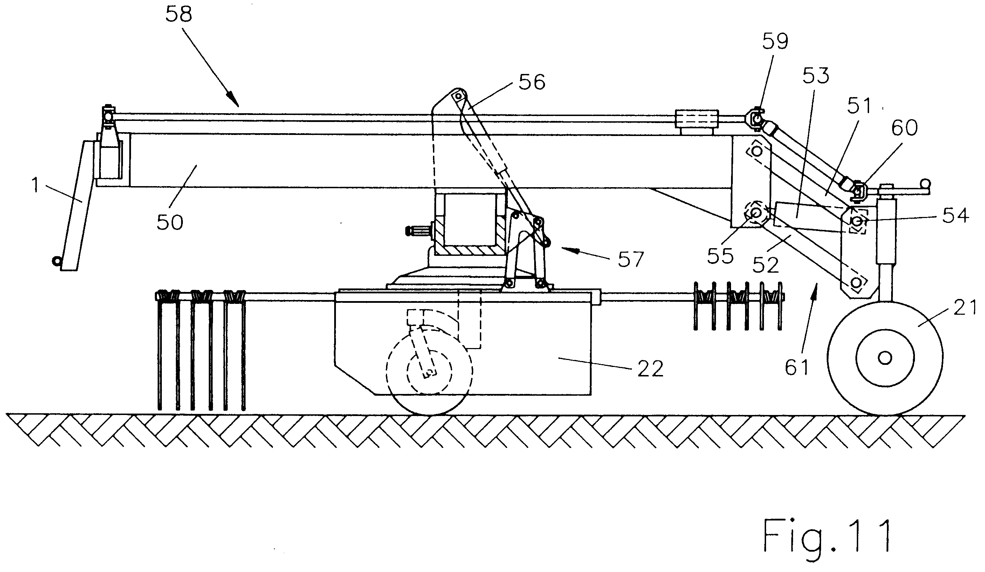

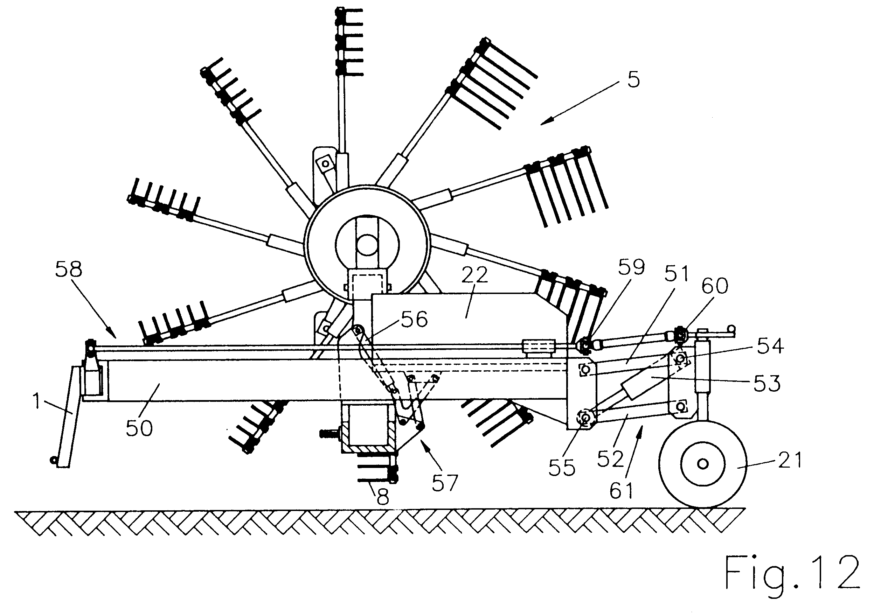

In den Fig. 11 und 12 ist ein Ausführungsbeispiel nach der Erfindung dargestellt, bei dem das Hubvermögen der Unterlenker der Dreipunkthydraulik des Traktors mitbenutzt wird, um die endgültige Transporthöhe zu verringern.

Fig. 11 zeigt den Schwader in einem Längsschnitt, bei dem ein vorzugsweise zweiteiliges Maschinengestell (50) mit dem Anschlußbock (1) schwenkbeweglich verbunden ist. Etwa in der Mitte des Maschinengestells (50) ist der Mittelträger (17) befestigt, an dem die Ausleger (3,4) mit den Kreiselrechen (5,6) gelenkig verbunden sind. Am Ende des Maschinengestells (50) sind Stützlenkerparallelogramme (61) angeordnet. Sie stellen die Verbindung zwischen Maschinengestell (50) und Laufrädern (21) her und bestehen im wesentlichen aus dem oberen Parallelogrammlenker (51) und dem unteren Parallelogrammlenker (52). Vorzugsweise wird jedem Laufrad ein Stützlenkerparallelogramm (61) zugeordnet. Beispielsweise ist in jedem Stützlenkerparallelogramm (61) ein hydraulischer Stellzylinder (53) integriert, der einen oberen Gelenkpunkt (54) mit dem unteren Gelenkpunkt (55) am Maschinengestell (50) verbindet.

Um in die endgültige Transportstellung (Fig. 12) dieses Ausführungsbeispiels zu gelangen, wird nach dem Hochklappen der Kreiselrechen (5,6) in eine etwa senkrechte Stellung, aus einer oberen Arbeitsposition des Maschinengestells (50) heraus, die unteren Lenker des Traktordreipunktgestänges abgesenkt und der hydraulische Stellzylinder (53) vom Traktor aus betätigt. Dadurch senkt sich das Maschinengestell (50) auf die durch die erforderliche Bodenfreiheit der Zinken (8) begrenzte Lage ab und die Transporthöhe der Kreiselrechen (5,6) wird in vorteilhafter Weise verringert.

Der Schwader ist vorzugsweise mit einem außermittig angeordneten Lenkgestänge (58) versehen, das die Verbindung zwischen dem Anschlußbock (1) und den Laufrädern (21) herstellt und den Schwader bei Kurvenfahrt optimal hinter den Traktor steuert. Das Lenkergestänge ist in seinem rückwärtigen Bereich mit seinen Gelenkpunkten dem Stützlenkerparallelogramm (61) durch Kreuzgelenke (59,60), die sich in der Ebene der Anlenkpunkte für die Parallelogrammlenker (51,52) befinden, angepaßt, so daß sich die Hubbewegungen des Stellzylinders (53) nicht auf das Lenkverhalten der Laufräder (21) auswirkt.

Das Schwadtuch (22) wird beispielsweise über ein Hubgestänge (57) mittels des Stellzylinders (56) um etwa 180° geschwenkt in eine Transportposition gebracht. Dabei sind Maßnahmen zur Stabilisierung des Schwadtuchs (22) erforderlich, damit dieses in der Transportposition nicht durchhängt.

Die Anwendung der Vorteile der Erfindung beschränkt sich nicht auf die beschriebenen Anwendungsbeispiele. Sie können bei allen Heuwerbungsmaschinen gemäß Anspruch 1 angewendet werden, bei denen trotz großer Arbeitsbreiten geringe Transportabmessungen gewünscht werden.

## Patentansprüche

1. Heuwerbungsmaschine mit mindestens einem um eine etwa senkrechte Drehachse umlaufenden Kreiselrechen (5,6), der an einem Maschinengestell befestigt ist, das einerseits mit dem Traktor verbindbar ist und sich andererseits auf mindestens einem Laufrad (21) abstützt, und bei dem jeder Kreiselrechen (5,6) zu Transportzwecken um eine etwa fahrtrichtungsparallele Achse (19) um etwa 90° in eine Endposition hochschwenkbar ist, dadurch gekennzeichnet, daß jeder Kreiseirechen (5,6) aus seiner hochgeschwenkten Endposition senkrecht durch Absenken zumindest eines Teils des Maschinengestells (2,28,38,50) in seine endgültige Transportstellung absenkbar ist.

2. Heuwerbungsmaschine nach Anspruch 1, dadurch gekennzeichnet, daß der Mittelbereich des Maschinengestells (2,38) zur Absenkung knickbar ausgeführt ist.

3. Heuwerbungsmaschine nach Anspruch 2, dadurch gekennzeichnet, daß das Maschinengestell (2) mit seinem Mittelträger (17) verbundene Längslenker (13,14,15,16) aufweist.

4. Heuwerbungsmaschine nach Anspruch 3, dadurch gekennzeichnet, daß die Längslenker (13,15;14,16) als Parallelogrammlenker ausgebildet sind, die jeweils eine gemeinsame, mittlere Gelenkverbindung (20) aufweisen.

5. Heuwerbungsmaschine nach Anspruch 1, dadurch gekennzeichnet, daß der Ausleger (3,4) jeden Kreiselrechens (5,6) an einem relativ zum Maschinengestell (28) abklappbaren Lenker (30) gelenkig angreift.

6. Heuwerbungsmaschine nach einem der Ansprüche 1 bis 5, dadurch gekennzeichnet, daß zur Absenkung der Kreiselrechen (5,6) hydraulische Stellzylinder (18,32,40,53) vorgesehen sind.

7. Heuwerbungsmaschinen nach einem der Ansprüche 1 bis 6, dadurch gekennzeichnet, daß ein Hubgestänge (23,35,45,57) zum Anheben des Schwadtuches (22) beim Absenkvorgang vorgesehen ist.

8. Heuwerbungsmaschine nach Anspruch 7, dadurch gekennzeichnet, daß während des Absenkvorganges das Schwadtuch (22) um etwa 90° in eine Transportstellung geklappt wird.

9. Heuwerbungsmaschine nach Anspruch 6, dadurch gekennzeichnet, daß ein Hydraulikzylinder (40) den Bestandteil eines Längslenkers (41) bildet.

10. Heuwerbungsmaschine nach einem der Ansprüche 1 bis 9, dadurch gekennzeichnet, daß das oder die Laufräder (21) des Maschinengestells (50) relativ zu diesem auf- und abverstellbar mit dem Maschinengestell (50) verbunden ist.

11. Heuwerbungsmaschine nach Anspruch 10, dadurch gekennzeichnet, daß zur Höhenverstellung die Laufräder (21) über ein oder mehrere Stützlenkerparallelogramme (61) mit dem Maschinengestell (50) verbunden sind.

## Claims

1. A haymaking machine with at least one circular rake (5,6) rotating about a vertical axis of rotation, secured to a machine frame, which on the one side is capable of being connected to a tractor, and, on the other, is supported on at least one running wheel (21), and with which each circular rake (5,6) is capable, for transport purposes, of being folded vertically upwards by about 90° into a final position, about an axis (19) approximately parallel to the direction of travel, characterised by the fact that each circular rake (5,6) is capable of being lowered through vertical from its raised final position by lowering at least one part of the machine frame (2,28,38,50) into its final transport position.

2. A haymaking machine according to Claim 1, characterised by the fact that the central section of the machine frame (2,38) is designed to fold in order to be lowered.

3. A haymaking machine according to Claim 2, characterised by the fact that the machine frame (2) features longitudinal guide elements (13,14,15,16) which are connected to its central carrying element (17).

4. A haymaking machine according to Claim 3, characterised by the fact that the longitudinal guide elements (13,15;14,16) are designed as parallelogram guide elements, each of which features a common central jointed connection (20).

5. A haymaking machine according to Claim 1, characterised by the fact that the boom (3,4) of each circular rake (5,6) engages in a jointed connection to a guide element (30) which is capable of folding relative to the machine frame (28).

6. A haymaking machine according to one of Claims 1 to 5, characterised by the fact that the hydraulic actuating cylinders (18,32,40,53) are provided for lowering the circular rakes (5,6).

7. A haymaking machine according to one of Claims 1 to 6, characterised by the fact that a thrust rod (23,35,45,57) is provided to raise the swath cloth (22) during the lowering process.

8. A haymaking machine according to Claim 7, characterised by the fact that during the lowering process the swath cloth (22) will be rotated by about 90° into a transport position.

9. A haymaking machine according to Claim 6, characterised by the fact that a hydraulic cylinder (40) forms a component part of a longitudinal guide element (41).

10. A haymaking machine according to one of Claims 1 to 9, characterised by the fact that the running wheel(s) (21) of the machine frame (5) is connected to the machine frame (50) in a manner capable of adjustment upwards and downwards.

11. A haymaking machine according to Claim 10, characterised by the fact that for the purpose of height adjustment, the running wheels (21) are connected to the machine frame (50) by means of one or more support guide parallelogram elements (61).

## Revendications

1. Machine pour la fenaison avec au moins un râteau centrifuge (5,6) tournant autour d'un axe de rotation sensiblement perpendiculaire, fixé à un bâti de machine, pouvant être relié d'une part à un tracteur et s'appuyant d'autre part sur au moins une roue de roulement (21), et avec lequel chaque râteau centrifuge (5,6) peut basculer vers le haut à des fins de transport autour d'un axe (19) sensiblement parallèle à la direction de marche d'environ 90° dans une position terminale, caractérisée en ce que chaque râteau centrifuge (5,6) peut être abaissé verticalement vers le bas de sa position terminale basculée vers le haut, dans sa position définitive de transfert par abaissement d'au moins une partie du bâti de machine (2,28,38,50).

2. Machine pour la fenaison selon la revendication 1, caractérisée en ce que la zone centrale du bâti de machine (2,38) est réalisée pliable par abaissement.

3. Machine pour la fenaison selon la revendication 2, caractérisée en ce que le bâti de machine (2) comporte des bras oscillants longitudinaux (13,14,15,16) reliés à son support central (17).

4. Machine pour la fenaison selon la revendication 3, caractérisée en ce que les bras oscillants longitudinaux (13,15; 14,16) sont réalisés en bras oscillants de parallélogramme, qui comportent respectivement une liaison articulée (20) centrale commune.

5. Machine pour la fenaison selon la revendication 1, caractérisée en ce que le bras (3,4) saisit chaque râteau centrifuge (5,6) de manière articulée sur une barre (30) rabattante par rapport au bâti de machine (28).

6. Machine pour la fenaison selon une des revendications 1 à 5, caractérisée en ce que pour abaisser les râteaux centrifuges (5,6) sont prévus des vérins de réglage hydrauliques (18,32,40,53).

7. Machine pour la fenaison selon une des revendications 1 à 6, caractérisée en ce qu'une tringlerie de levage (23,35,45,57) est prévue pour soulever la toile d'andain (22) lors de l'opération d'abaissement.

8. Machine pour la fenaison selon la revendication 7, caractérisée en ce que pendant l'opération d'abaissement, la toile d'andain (22) est rabattue d'environ 90° dans une position de transport.

9. Machine pour la fenaison selon la revendication 6, caractérisée en ce que un vérin hydraulique (40) constitue l'élément constitutif d'un bras oscillant longitudinal (41).

10. Machine pour la fenaison selon une des revendications 1 à 9, caractérisée en ce que la ou les roues de roulement (21) du bâti de machine (50) est ou sont reliées au bâti de machine (50) et réglables vers le haut et vers le bas par rapport à celui-ci.

11. Machine pour la fenaison selon la revendication 10, caractérisée en ce que pour le réglage en hauteur, les roues de roulement (21) sont reliées au bâti de machine (50) par une ou plusieurs barres en parallélogramme d'appui (61).
